# EUROPEAN PATENT APPLICATION

(11) **EP 4 645 612 A1**
(43) Date of publication of application: **05.11.2025**
(21) Application number: 24173996.0
(22) Date of filing: 03.05.2024
(51) Int. Cl.: H01S 3/00

(54) **COMPRESSOR FOR PULSED LASER RADIATION**

(71) Applicant: Marvel Fusion GmbH, 80339 Munich (DE)
(72) Inventor: FISCHER, Peter, 80339 München (DE)
(74) Representative: HKW Intellectual Property PartG mbB

(57) **Abstract**

A pulse compressor for time-compressing pulsed laser radiation according to a chirped pulse amplification, CPA, scheme, the pulse compressor comprising a first compressor element, and a second compressor element. The first compressor element is configured to receive as input the pulsed laser radiation and to produce as output first compressed radiation having a first pulse duration. The second compressor element is configured to receive as input the first compressed radiation and to produce as output second compressed radiation having a second pulse duration. The second pulse duration is shorter than the first pulse duration. The first compressor element is configured to time-compress the pulse of the pulsed laser radiation of a first compression factor. The second compressor element is configured to time-compress the pulse of the first compressed radiation of a second compression factor. The first compression factor is larger than the second compression factor.

## Description

### TECHNICAL FIELD

The present disclosure relates to an optical compressor for time-compressing pulsed laser radiation according to a chirped pulse amplification (CPA) scheme. It also relates to a method of compressing radiation using a compressor in a CPA scheme.

### TECHNICAL BACKGROUND

Optical amplifiers are devices configured to receive as input laser radiation having a given optical power and produce as output laser radiation having a higher optical power. In the art, there are known several types of optical amplifiers. An example includes laser amplifiers based on stimulated emission.

Conventional amplifiers, however, cannot be easily used to amplify ultrashort laser radiation which presents particular challenges. For instance, in the ultrashort regime, radiation damage of the amplifier, or of other optical elements downstream of the amplifier, needs to be minimized to avoid malfunctioning or shortening of the components' lifetime. In fact, due to the short duration, the pulse after amplification has a relatively high power. Generally, an ultrashort pulse is defined as a pulse whose duration ranges from 1 femtosecond, fs, to 100 picoseconds, ps.

Throughout this disclosure, the duration of a pulse shall be understood to be the length of time corresponding to the full width at half maximum (FWHM) of the pulse intensity.

To overcome these difficulties, a so called chirped-pulse amplification, CPA, scheme has been developed. The CPA scheme is for instance described in R. Paschotta's article on 'chirped-pulse amplification' in the RP Photonics Encyclopedia. CPA was pioneered by Gérard Mourou and Donna Strickland, who were jointly awarded the Nobel prize in 2018.

According to the CPA scheme the radiation is not directly amplified, i.e., is not amplified in a single step. Rather three steps are carried out by providing along the beam path three different elements. These elements are: (1) a stretcher (or pulse stretcher), for stretching incoming pulsed laser radiation, (2) an amplifier (also referred to as optical amplifier) for amplifying the stretched pulsed laser radiation, and (3) a compressor (or optical compressor) for compressing the amplified and stretched pulsed laser radiation. The amplifier can also be referred to as gain medium.

In more detail, in a first step the pulsed laser radiation is chirped, either positively or negatively, and temporally stretched to a longer pulse duration. That is, the pulsed laser radiation having a first pulse duration is converted into pulsed laser radiation having a second pulse duration, wherein the second pulse duration is longer than the first pulse duration. Typically, the pulse stretching is achieved by letting the pulsed laser radiation interact with an element. For instance, the pulsed laser radiation may impinge on a reflective element or it may propagate through a dispersive element. The reflective element may be one element, or it may be more than one element. The dispersive element may be one element, or it may be more than one element.

The pulse frequency chirping, or pulse stretching, may lead to a reduction of the peak power of the pulse of the pulsed laser radiation. A longer stretching may correspond to a lower peak power. Therefore, by appropriately tailoring the stretching of the pulse it can be ensured that its peak power remains below a specific predetermined threshold. The threshold can be chosen based on the properties of the amplifier and particularly its radiation damage threshold.

In a second step, the stretched pulse may be amplified by the amplifier.

The combined result of the first two stages may therefore be an amplified and stretched laser pulse. In a third and final step, it may be possible to compensate for the stretching by optically/temporally compressing the laser pulse via the compressor. This is also referred to as unchirping the laser pulse. The compressor may be made up of two pairs of gratings (or a double pass) with dispersion properties opposite to the dispersion properties of the stretcher and amplifier. This may result in the compressed laser pulse duration being comparable to the duration of the pre-stretcher laser pulse. Comparable may mean that the compressed laser pulse duration may have the same, or almost the same, time duration of the pre-stretched laser pulse. Alternatively, comparable may mean that the compressed laser pulse duration may be of the same order of magnitude of the duration of the pre-stretched laser pulse.

Usually, in view of the high peak power, it may be required that the beam diameter at the compressor be quite large. In some instance the beam diameter can be as large as 1 m.

### SUMMARY

By increasing the size, for instance the diameter, of the laser beam it may be possible to decrease the energy density distributed on the compressor and on the optical components downstream of the compressor and thus mitigate or even eliminate radiation damage.

The minimum size of the pulse compressor may depend on the damage threshold of the materials which constitute the compressor, as well as on the peak intensity of the (compressed) laser radiation, on the pulse energy and on the wavelength. Another relevant factor may be the diameter of the radiation beam to be compressed. In particular, the size, and for instance the diameter, of the compressor may need to be at least equal to or larger than the size, for instance the diameter, of the stretched and amplified radiation beam.

Similar considerations may also hold for the optics downstream of the compressor, which therefore may also need to be large.

However, large compressors and large optics may come with a number of disadvantages. For instance, large compressors and/or large optics are difficult to fabricate, to handle, to transport, and to install. They also pose several physical constraints on the optic components along the beam path. In fact, their relatively large sizes may decrease the flexibility of installation of other components along the beam path. Moreover, the manufacturing costs of the compressor and/or of the optics downstream of the compressor may also increase with their size.

There is therefore a need in the art to reduce the size of the compressor used in CPA amplification schemes. There is also a need in the art to enable reduction of the size of the optical components downstream of the compressor. In view of this, it is an object of the present disclosure to at least partially address, or at least partially mitigate, the above shortcomings.

According to the disclosure, this is achieved thanks to the subject matter of the independent claims. Further preferred embodiments of the disclosure are presented in connection with the dependent claims. This objective is reached in accordance with the teachings of the independent claims. The dependent claims also present other further advantageous embodiments.

According to an aspect of the present disclosure there is provided a pulse compressor 14 for time-compressing pulsed laser radiation according to a chirped pulse amplification, CPA, scheme, the pulse compressor 14 may comprise a first compressor element 14a, and a second compressor element 14b. The first compressor element 14a may be configured to receive as input the pulsed laser radiation and to produce as output first compressed radiation having a first pulse duration. The second compressor element 14b may be configured to receive as input the first compressed radiation and to produce as output second compressed radiation having a second pulse duration. The second pulse duration being shorter than the first pulse duration. The first compressor element 14a may be configured to time-compress the pulse of the pulsed laser radiation by a first compression factor and the second compressor element 14b may be configured to time-compress the pulse of the first compressed radiation by a second compression factor, wherein the first compression factor may be larger than the second compression factor.

According to an aspect of the present disclosure the first compression factor may at least be 100 and the second compression factor may at least be 3. Preferably the first compression factor is larger than 1000.

According to an aspect of the present disclosure the first compressor element 14a may be configured to time-compress the pulse of the pulsed laser radiation from a first range to a second range and the second compressor element 14b may be configured to time-compress the pulse of the first compressed radiation from a third range to a fourth range. The first range may be about from 1 ps to about 10 ns. The second range may be from about 100 fs to about 500 fs. The third range may be from about 100 fs to about 500 fs. The fourth range may be from about 5 fs to about 200 fs.

According to an aspect of the present disclosure, the ratio of the first compression factor to the second compression factor may at least be 10:1, and preferably at least 100:1.

According to an aspect of the present disclosure the second compressor element 14b may be a multilayer structure comprising at least two layers 14b1, 14b3.

According to an aspect of the present disclosure the multilayer structure may comprise at least a first layer 14b1, a second layer 14b2 and a third layer 14b3, the second layer 14b2 being sandwiched between the first layer 14b1 and the third layer 14b3. The first layer 14b1 and the third layer 14b3 may be made of respective solid materials and the second layer 14b2 may comprise a fluid or gas substance.

According to an aspect of the present disclosure at least one of the first compressor element 14a and the second compressor element 14b may be a dispersion compression element. Preferably the first compressor element 14a is a grating compressor and the second compressor element 14b is a glass material, a transparent material or a partially transparent material.

According to an aspect of the present disclosure the second compressor element 14b may be transparent or partially transparent at least in the wavelength range from 250 to 1100 nm.

According to an aspect of the present disclosure the pulse compressor may be configured to have a material dispersion that is higher in the wavelength range from 375 nm to 550 nm than the material dispersion in the wavelength range from 575 nm to 2500 nm.

According to an aspect of the present disclosure the second compressor element 14b may be a window for an experimental chamber 17. Alternatively, the second compressor element 14b may be comprised in a window for an experimental chamber 17. Alternatively, the second compressor element 14b may be incorporable in a window for an experimental chamber 1.

According to an aspect of the present disclosure there is provided a system 100 for producing pulsed laser radiation. The system may comprise: a pulse stretcher 12, an amplifier 13, and the pulse compressor 14 of any of the previous aspects. The system may also comprises a laser radiation source 11 emitting pulsed laser radiation. The pulsed laser radiation may comprise a fundamental component in the wavelength range comprised between 575 nm to 2500 nm, and harmonic components. The system may further comprise at least one optic element 19 configured to remove laser radiation components lower than the Nth harmonic of the laser radiation source, wherein N is an integer number equal to or larger than 2.

According to an aspect of the present disclosure the system may further comprise a beam expander placed between the first compressor element 14a and the second compressor element 14b and configured to receive as input the first compressed radiation and expand it, the second compressor element 14b may be configured to receive as input the expanded first compressed radiation.

According to an aspect of the present disclosure the system may further comprise a spatial light modulation unit for manipulating or adjusting the shape of the first compressed radiation in proximity of the second compressor element 14b. The spatial light modulation unit may be arranged in correspondence to the pulse stretcher. Preferably the spatial light modulation unit comprises either a spatial filter, or a Pockels cell, or an adaptive mirror.

According to an aspect of the present disclosure the system may further comprise at least one transport mirror is interposed between the first compressor element 14a and the second compressor element 14b.

According to an aspect of the present disclosure there is provided a method for compressing a pulse of pulsed laser radiation according to a chirped pulse amplification, CPA, scheme. The method may comprise: - providing S1 a first compressor element 14a configured to receive as input the pulsed laser radiation and to produce as output first compressed radiation having a first pulse duration; - providing S2 a second compressor element 14b configured to receive as input the first compressed radiation and to produce as output second compressed radiation having a second pulse duration, wherein the second pulse duration being shorter than the first pulse duration; - letting S3 the pulsed laser radiation impinge on the first compressor element 14a; - letting S4 the first compressed radiation impinge on the second compressor element 14b so as to produce as output the second compressed radiation.

Another aspect relates to a computer program product that comprises a program code for executing the method according to one of the aforementioned aspects when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the device and/or system of the present invention apply, *mutatis mutandis,* to the method of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

FIG. 1 schematically shows an exemplary simplified arrangement for a CPA scheme according to the known art.
FIG. 2 schematically shows an exemplary pulse compressor according to a first embodiment of the present disclosure.
FIG. 3 schematically shows an exemplary pulse compressor according to another embodiment of the present disclosure.
FIG. 4 schematically shows an exemplary pulse compressor according to another embodiment of the present disclosure.
FIG. 5 schematically shows an exemplary system for producing pulsed laser radiation according to a second embodiment of the present disclosure.
FIG. 6 Schematically shows an exemplary method for compressing a pulse of pulsed laser radiation according to a chirped pulse amplification, CPA, scheme.

### DETAILED DESCRIPTION

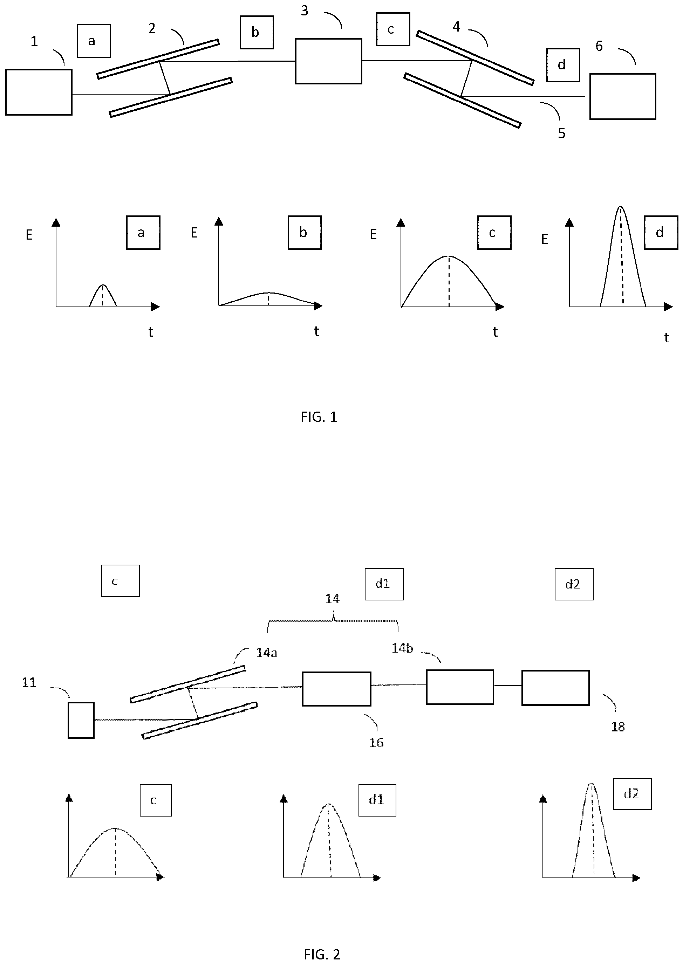

FIG. 1 shows an example of a CPA scheme for amplifying pulsed laser radiation according to the known art. In particular, it shows a source of laser radiation 1, a stretcher 2, an amplifier 3 and a compressor 4. Reference 5 represents the output amplified laser radiation and reference 6 a generic optical element.

The compressor 4 may for instance be a pair of gratings. Each grating may have equally spaced grooves (not shown in the figure).

Schematically the figure also depicts an exemplary relationship between the energy of the laser pulse against the pulse duration in correspondence of different sections of the beam path. The beam path may be the path of the laser radiation, or beam. It may originate from the source of laser radiation 1 and may cross all the optical elements shown in FIG. 1 from left to right.

As it can be seen in a pre-stretching stage, the pulse has short duration and low energy, see letter a) in the figure. After the stretching, the pulse duration is longer and hence also the peak power is lower, see letter b in the figure. After amplification the pulse has higher energy and it is still stretched, see letter c in the figure. After compression the pulse has a shorter duration and hence an even higher power, see letter d in the figure. It will be understood that the profiles of the spectra are not in scale and that the dimensions have been exaggerated to better illustrate the concept underlying the disclosure.

Optical element 6 represents one or more optical components. Optical element 6 may comprise one or more optical elements as for instance mirrors, beam splitters, telescopes and the like. Generically, optical element 6 may be one or more optical elements which are configured to confer to the laser radiation certain predetermined properties. In other words, optical element 6, generically represents all the other elements, or at least a subset thereof, which may be placed along the beam path after the laser radiation, i.e., the beam has been amplified according to a CPA amplification scheme.

### PUSLE COMPRESSOR

FIG. 2 shows a pulse compressor 14 according to a first embodiment of the present disclosure. The pulse compressor 14 may also be referred to as compressor or optical compressor. In particular, the figure shows a pulse compressor 14 for time-compressing pulsed laser radiation according to a chirped pulse amplification, CPA, scheme. The pulse compressor 14 may receive the pulsed laser radiation from a pulsed laser radiation source 11. The pulse compressor 14 compresses the pulse radiation and may then provide the compressed pulsed laser radiation to the subsequent portion of the beam path 18.

The pulsed laser radiation may be emitted by the laser radiation source 11 and hence the pulsed laser radiation travels from the left side of the figure to the right side of the figure. As used herein the terms upstream and downstream refer to the direction of the pulsed laser radiation along the beam path. Therefore, if a first element is placed upstream of a second element, it will be understood that the first element may be hit by the pulsed laser radiation before the second element may be hit by the pulsed laser radiation.

It will be also understood that during operation, the configuration of FIG. 2 may be used together with other optical elements. For the sake of simplicity these other optical components are not shown in the figure. Amongst other things, the configuration may be used in connection with a pulse stretcher and a pulse amplifier, similar as those shown in FIG. 1.

The pulse compressor 14 is configured to compress the pulsed laser radiation by a compression factor. The pulse compressor 14 comprises a first compressor element 14a, and a second compressor element 14b.

The first compressor element 14a may be configured to receive as input the pulsed laser radiation and to produce as output, first compressed radiation having a first pulse duration. The second compressor element 14b may be configured to receive as input the first compressed radiation and to produce as output, second compressed radiation having a second pulse duration. The second pulse duration may be shorter than the first pulse duration. This is also exemplarily illustrated in FIG. 2 where it can be seen that the pulse duration in correspondence of letter d1 may be longer than the pulse duration in correspondence of letter d2. Incidentally, it will be understood that the figures do not show elements and/or pulses in scale. Rather in the figures emphasis is placed on illustrating the concepts underlying the disclosure.

The first compressor element 14a may be configured to time-compress the pulse of the pulsed laser radiation of a first compression factor. The second compressor element 14b may be configured to time-compress the first compressed radiation of a second compression factor. The first compression factor may be larger than the second compression factor. That is, the largest portion of the compression may occur by means of the first compressor element 14a, whereas the remaining, smaller, compression may occur at the second compressor element 14b.

The first compressor element 14a may be, for instance, a grating compressor. For instance, it may be, or it may comprise, two pairs of gratings. The second compressor element 14 may also be, for instance, a grating compressor. For instance, it may be, or it may comprise, two pairs of gratings. However, the present disclosure is not limited thereto, and other compressors may be employed. Other known compressors are, for instance, prisms, grisms or chirped mirrors. Preferably, the second compressor element 14b may be a transparent material, as for instance a glass compressor or a glass block. In this case, the bulk of the glass may compress the radiation by material dispersion. Alternatively, the second compressor element 14b may be a partially transparent material with dispersive properties. The first compressor element 14a may be identical to the second compressor element 14b, i.e., the first compressor element 14a and the second compressor element 14b may be identical with respect to their physical properties. Alternatively, the first compressor element 14a and the second compressor element 14b may be different from each other, i.e., the first compressor element 14a may differ from the second compressor element 14b in at least one physical property (e.g., the way it is supplied (prism, grism, chirped mirror, etc., and/or a transparency value and/or any other physical parameter as outlined elsewhere herein).

Glass may particularly be advantageous since it is easier to produce than similar sized gratings.

The pulsed laser radiation may propagate along the beam path so as to cross the first compressor element 14a first and to cross the second compressor element 14b afterwards. That is, the first compressor element 14a may be placed upstream of the second compressor element 14b.

The thickness of the second compressor element 14b, in case it is a glass compressor, may be selected based on the time duration and/or spectral bandwidth of the first compressed radiation. Generally, speaking, a number of adjustments may be performed based on the time duration and/or spectral bandwidth of the first compressed radiation.

In particular, the groove spacing of the gratings compressor may be selected based on the time duration and spectral bandwidth of the radiation impinging thereon. That is, of the pulsed radiation, for the first compressor element 14a, or of the first compressed radiation, for the second compressor element 14b.

In fact, the shorter the duration of the first compressed radiation may be the thinner the thickness of the second compressor element may be that may be selected. Further, the broader the spectrum of the first compressed radiation the thinner the thickness of the second compressor element that may be selected.

Since there are two compressor elements and not a single compressor element, it becomes possible to reduce the size of the first compressor element 14a. It also becomes possible to reduce the radiation burden the first compressor element 14a is exposed to. In fact, since the compression occurs in two stages, the first compressed radiation may have a power peak lower than the power peak it would have if the radiation were fully compressed according to a standard CPA scheme. Correspondingly the manufacture of the first compressor element becomes easier and the otherwise high requirements on the quality of the optical component downstream of the compressor can be at least partially relaxed.

Due to the lower intensity and longer pulse duration of the first compressed radiation, the damage threshold of the first compressor element 14a may increase and therefore the size of the first compressor element 14a can be decreased. The size of the first compressor element can be decreased approximately by the square root of the compression factor of the second compressor element 14b.

In other words, by providing two compressor elements it may be possible to reduce the constraints on the first compressor element 14a, thus decreasing costs, simplifying the manufacture and making it easier to handle the optics along the beam path. For instance, in case the first compressor element 14a is a grating compressor, the size of the grating may be reduced.

The aperture of the pulsed laser radiation may be the shape of the pulsed laser radiation along a direction perpendicular to the direction of propagation of the pulsed laser radiation. That is, the aperture of the pulsed laser radiation may be a cross section of the pulsed laser radiation. The aperture may, for instance, be of a circular shape or of a rectangular shape. However, it may be of other shapes, as for instance squared or triangular. In particular, the shape of the pulsed laser radiation may be chosen depending on the particular application.

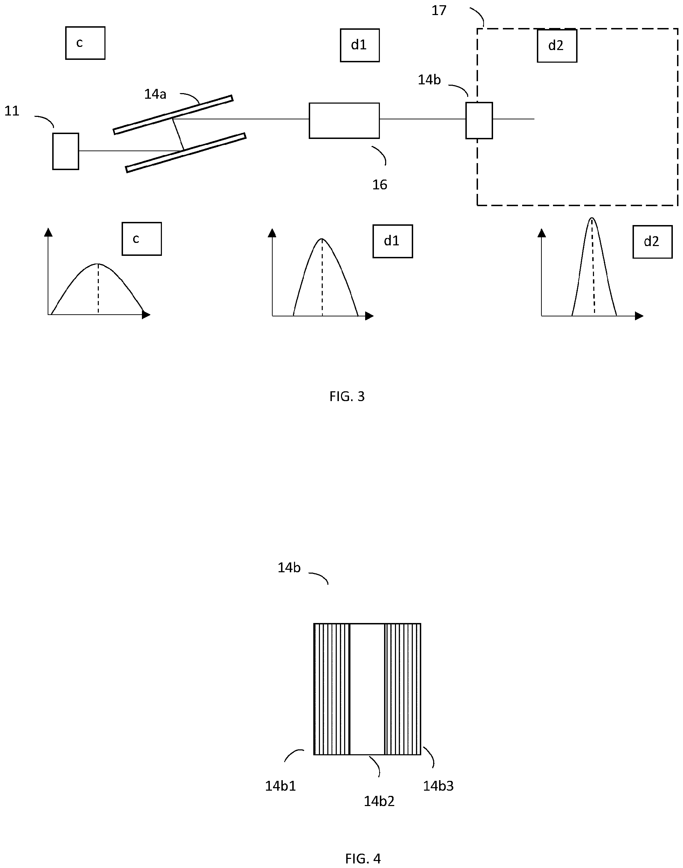

Moreover, the beam diameter prior to the second compressor element 14b may be reduced. This may relax constraints on the subsequent beam transport optic. For instance, and with reference to FIG. 3, it may relax the constrains on the optics transporting the beam to the reactor chamber. This is the case since the second compressor element 14b, for instance a dispersion compressor, is then less sensitive to misalignments.

FIG. 2 also shows optical elements 16. Similar to optical elements 6 of FIG. 1, optical elements 16 may generically represent one or more optical elements which are configured to confer the laser radiation certain predetermined properties as it is usually the case in a conventional beam path. In other words, optical elements 16, may generically represent all the other elements, or at least a subset thereof, which may be placed along the beam path after the laser radiation has been amplified according to a CPA amplification scheme to obtain a pulsed laser radiation beam having certain predetermined properties.

According to some configurations, optical elements 16 may comprise at least one transport mirror. That is, at least one transport mirror may be interposed between the first compressor element and the second compressor element.

According to the present disclosure, it is possible to decrease the size of the beam in comparison to the size of the beam in comparable standard CPA scheme. Additionally, it becomes possible to employ one or more transport mirrors with lower damage threshold. Moreover, transport mirrors with higher threshold damage can operate with an increased threshold.

By enabling the use of smaller beam sizes, it is possible to employ smaller optics downstream of the first compressor 14a. This results in lower manufacturing costs as well as simplifying the handling and increasing the compactness of the optics, for instance of optical elements 16. Moreover, the generation of focused radiation is per se highly desirable for certain applications.

By only partially compressing the pulsed laser radiation, it is possible to relax the constraints on the optical elements 16 placed between the first compressor element 14a and the second compressor element 14b. This is the case since the peak energy of the pulsed radiation after partial compression is lower than after a standard full CPA compression. In view of the lower peak energy of the pulsed laser radiation, it is possible to more flexibly engineer optical elements 16 interposed between the first compressor element 14a and the second compressor element 14b.

According to an example, optical elements 16 may include a nonlinear crystal for frequency conversion to a highly dispersive wavelength regime. The present disclosure makes it possible to relax the constraints on the nonlinear crystal and more flexibly engineer it. This is possible since the intensity and the energy per unit of area reaching the nonlinear crystal is lower compared to a standard CPA scheme, because the pulse duration is longer. For instance, the thickness of the nonlinear crystal may be moderately increased which leads to an easier handling of the crystal. As a comparative example it is noted that nonlinear crystals in standard CPA scheme according to some applications may be as thin as 0,8 mm and hence be difficult to handle.

The final compression via the second compressor element 14b may, for instance, be performed with the transparent material. Using glass instead of gratings may make it possible to simplify the manufacture and the handling of the compressor. In fact, amongst other things, gratings, may require a groove spacing in the nanometer range and may therefore be difficult to manufacture.

As exemplarily shown by FIG. 3 the second compressor element 14b may also be a window for an experimental chamber 17.

Since the second compressor element 14b is also the window of the experimental chamber 17, it is possible to optimize the use of the optical elements along the beam path.

Generally, downstream of the window of the experimental chamber 17 no optical elements may be employed. None of the elements of the beamline is hence exposed to the maximum peak power of the second compressed radiation. Since none of these elements, for instance optical elements 16, may be exposed to the maximum peak power, it may be possible to increase the lifetime of said optical components.

Moreover, since the window of the experimental chamber 17 may carry out a double function the number of optical components employed may be decreased by one. Hence the structure of the beam path is simplified.

According to other examples, the second compressor element 14b may be comprised in a window for the experimental chamber 17. Further alternatively, the second compressor element 14b may be incorporable in a window for an experimental chamber 17. These configurations have similar advantages as those described above.

An experimental chamber 17 may be for instance a vacuum chamber. A target may be placed inside the experimental chamber and may be irradiated with the second compressed radiation.

Optical elements 16 may confer to the first compressed radiation specific properties. For instance, they may confer properties suitable to perform experiments on the target. For instance, they may convert the wavelength, and/or they may remove portions of the spectrum, and/or they may change the physical direction of the first compressed radiation, etc.

The second compressor element 14b may be transparent or almost transparent at least in the wavelength range comprised between 250 nanometers, nm, and 1100 nm. Preferably, the second compressor element 14b may be transparent or partially transparent at least in the wavelength range comprised between 350 nm and 1100 nm.

In general materials, which are transparent in the wavelength ranges from 250 to 1100 nm, may have higher refractive index in the first portion of the range, that is, in the short wavelength region of the range. Higher refractive indices and hence higher dispersion, may make compression in the given wavelength range easier.

The pulse compressor may be configured to have a material dispersion that is higher in a first wavelength range than the material dispersion in a second wavelength range. For instance, the pulse compressor may be configured to have a material dispersion in the wavelength range from 375 nm to 550 nm, i.e., the first wavelength range, higher than the material dispersion in the wavelength range from 575 nm to 2500 nm, preferably, between 750 nm and 1100 nm, i.e., the second wavelength range. According to another example the first wavelength range may be from 375 nm to 550 nm and the second wavelength range may be from 800 nm to 1100 nm. According to yet another example, the first range may be from 250 nm to 360 nm and the second wavelength range may be from 750 nm to 1100 nm.

The above configuration may especially be advantageous when used in combination with the following three elements: (1) a pulsed laser source having the fundamental component in the range of wavelengths from 575 nm to 2500 nm, preferably from 750 nm to 1100 nm, (2) means for converting the fundamental component into harmonics, and (3) with optical means configured to remove radiation having a wavelength from 575 nm to 2500 nm or from 750 nm to 1100 nm. These means may also be referred to as fundamental component removing means. The means for converting the fundamental component into harmonics are configured to convert the fundamental component of the radiation into harmonics. For instance, they are configured to convert the fundamental component into the second harmonics. As another example, they may be configured to convert the fundamental component into the third harmonic and/or to the higher harmonics. The nonlinear crystal may be an example of such means for converting the fundamental component into harmonics.

When the fundamental component of the pulsed laser radiation is in the range of wavelength comprised between 750 nm to 1100 nm the wavelength of the second harmonic may be in the range of wavelengths comprised between 375 nm to 550 nm. The second harmonic component may have a better temporal-intensity contrast than the fundamental component.

Moreover, when the fundamental component of the pulsed laser radiation is in the range of wavelength comprised between 750 nm to 1100 nm the wavelength of the third harmonic may be in the range of 250 nm to 360 nm. The third harmonic component may have an even better temporal-intensity contrast than the fundamental component.

Similar considerations hold when the fundamental component of the pulsed laser radiation may be in the range of wavelength comprised between 575 nm to 2500 nm. In this case, it may become feasible to exploit the third or higher harmonics.

According to the present disclosure, it may be possible to compress the pulsed laser radiation, for instance, from approximately between 10³ to 10⁵ times the Fourier limit, to the Fourier limit. This is possible by using the second harmonics, having a better temporal contrast than the fundamental component and by employing a transparent compressor having a higher dispersion at the shorter wavelength. Incidentally, using the second (or higher harmonics) also allows to further reduce the thickness of the second compressor element 14b.

The fundamental component removing means may be placed between the first compressor element 14a and the second compressor element 14b. Thanks to the fundamental component removing means the fundamental component may be removed before the first compressed radiation impinges on the second compressor element 14b. Alternatively, the fundamental component removing means may be placed upstream of the first compressor element 14a. This means that the fundamental component may be removed before the radiation impinges on the first compressor element 14a.

According to this configuration it may be possible to improve the temporal intensity characteristics of the first compressed radiation and/or the second compressed radiation. Moreover, it may also be possible to reduce the overall power the optical elements are subject to by removing radiation components which are not used later. Thus, flexibility in the design of the optical components may be increased.

### SYSTEM FOR PRODUCING PULSED LASER RADIATION

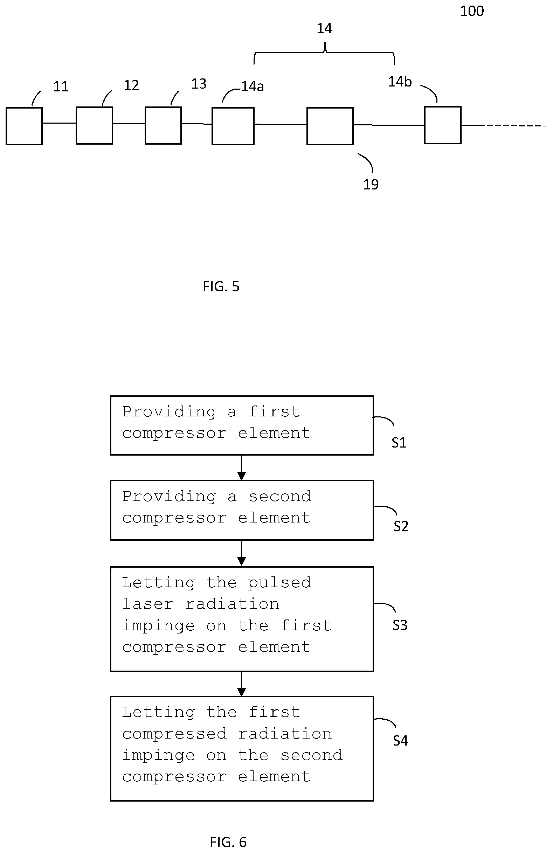

FIG. 5 shows a system for producing pulsed laser radiation according to a second embodiment of the present disclosure. The system comprises a pulse stretcher 12, an amplifier 13, a laser radiation source 11, and the pulse compressor 14. The pulse compressor 14 of this embodiment may be any of the pulse compressor described above in connection with the first embodiment.

The laser radiation source may be configured to emit pulsed laser radiation comprising a fundamental component in the wavelength range comprised between 575 nm to 2500 nm, preferably comprised between 750 nm and 1100 nm, and to emit harmonic components.

The system also comprises at least one optic element 19 configured to remove laser radiation components lower than the Nth harmonic of the laser radiation source. N is an integer number equal to or larger than 2. That is, the optic element 19 may be configured to remove the fundamental radiation and to retain the second, and higher, harmonic. As it is known, the wavelength λᵢ of a harmonic radiation component of order i can be determined based on the wavelength λ_{f} of the fundamental radiation according to the relation λᵢ = λ_{f}/i.

Accordingly, it may be possible to remove up to the N-1 harmonics from a pulsed laser radiation. By employing the second, or even higher, harmonic, it may be possible to improve the temporal contrast of the second compressed radiation and to leverage on the higher dispersion properties of the second compressor.

The system may optionally comprise a beam expander. The beam expander may be placed between the first compressor element 14a and the second compressor element 14b and it may be configured to receive as input the first compressed radiation and expand it. The second compressor element 14b may be then in turn configured to receive as input the expanded first compressed radiation from the beam expander.

The pulsed laser radiation may have a predetermined aperture i.e., a first beam aperture. The beam expander may represent a device configured to expand the beam aperture, i.e., to convert the first beam aperture in a second beam aperture. The first beam aperture may be smaller than the second beam aperture, or in other words, the second beam aperture may be larger than the first beam aperture. An example of a beam expander may be a telescope. The telescope may be for instance made of two lenses, alternatively it may be made of two curved mirrors. Widely known beam expander configurations are for instance the Galilean telescope and the Keplerian Telescope.

According to this configuration it may be possible to increase the aperture of the pulsed laser radiation. Thus, it may be possible to decrease the damage radiation on the optics downstream of the beam expander, as for instance the second compressor beam 14b. In fact, the higher the aperture of the pulsed laser beam is, the lower the energy distributed per unit of area on the second compressor 14b may be.

The system may also optionally comprise a spatial light modulation unit. The spatial light modulation unit may be configured to manipulate the shape of the first compressed radiation in proximity of, for instance at, the second compressor element. The manipulation of the shape of the first compressed radiation may comprise a spatial manipulation of the amplitude and/or of the phase of its wavefront. Preferably the spatial light modulation unit may either comprise a spatial filter, or a Pockels cell. Accordingly, it may be possible to precisely control the wavefront in proximity of, for instance at, the second compressor element. The manipulation of the shape may be also referred to as control or tuning of the shape.

Moreover, it may be possible to use a light modulator for fine adjusting the properties of the laser radiation. For instance, the light modulator may be used to adjust the spectral phase, or amplitude, of the laser radiation so that the laser radiation at the second compressor element may have a specific spectral phase or spectral amplitude. Examples of the light modulator are for instance an acoustic optic modulation unit or a spatial light modulation unit. According to another example the light modulator may be used to ensure the homogeneity of the pulse at the second compressor element.

The light modulator may be installed in correspondence of the stretcher. In other words, the light modulator may be arranged along the beam path so as to be upstream of the stretcher or so as to be comprised between the stretcher and the amplifier. According to another example the light modulator may be an adaptive mirror which is arranged between the first compressor element 14a and the second compressor element 14b. According to yet another example the light modulator may be an SLM, spatial light modulator.

FIG. 4 shows a second compressor element 14b according to a variation of the embodiments presented above. The second compressor element 14b may be a multilayer structure. The multilayer structure may comprise at least two layers and, in particular, a first layer 14b1, and a third layer 14b3. Alternatively, the multilayer structure may comprise at least three layers, in particular, a first layer 14b1, a second layer 14b2, and a third layer 14b3. The second layer 14b2 may be sandwiched between the first layer 14b1 and the second layer 14b3. The first layer 14b 1 and the third layer 14b3 may be made of respective solid materials. A solid material may be a material which is solid at room temperature or which is solid when frozen. The second layer 14b2 may comprise a fluid or gas substance and preferably a liquid.

According to an example, the first layer 14b1 and the third layer 14b3 are made of a same solid- material. According to another example the first layer 14b1 and the third layer 14b1 may be made of different solid materials. According to yet another example, the third layer 14b3 may be a sheet having a thickness smaller than 5 mm, preferably smaller than 4 mm.

With exposure to radiation, a compressor, for instance the second compressor element 14b may be subject to laser and/or radiation damages. The damages are usually predominant on the last portion of the compressor, i.e., the portion which is last crossed by radiation. This may lead to a deterioration of the compressor properties and ultimately to the necessity of substituting the compressor. A multi-layered second compressor element 14b may address this problem by making it easier to compensate for laser and/or radiation damages. In fact, in a multi-layer compressor it may become possible to only replace the portion which is last crossed by radiation, i.e., the third layer 14b3, while leaving the first layer 14b 1 in place. This may minimize the wasted material, thus decreasing costs while also increasing the easiness of handling and simplifying the manufacture.

The multi-layer structure may have more than three layers. For instance, it may additionally have a fourth layer and, optionally, also a fifth layer. More layers are also possible.

Another aspect of the present disclosure is schematically shown in FIG. 6. According to this aspect, there is provided a method for compressing a pulse of pulsed laser radiation according to a chirped pulse amplification, CPA, scheme. The method may comprise the following steps:
A first step S 1 of providing a first compressor element configured to receive as input the pulsed laser radiation and to produce as output first compressed radiation having a first pulse duration.
A second step S2 of providing a second compressor element configured to receive as input the first compressed radiation and to produce as output second compressed radiation having a second pulse duration, wherein the second pulse duration being shorter than the first pulse duration.
A third step S3 of letting the pulsed laser radiation impinge on the first compressor element.
A fourth step S4 of letting the first compressed radiation impinge on the second compressor element so as to produce as output the second compressed radiation.

### FURTHER ASPECTS OF THE DISCLOSURE

According to another aspect of the disclosure, a spectrum broadening unit may be employed to broaden the spectrum. That is to convert, in the pulse duration domain, long pulses-to shorter pulses. The spectrum broadening unit may for instance be a self-phase modulation, SPM, unit, that is a device configured to induce self-phase modulation effects on the laser radiation.

A pulse having a given spectral bandwidth and hence a given pulse duration may be converted to a pulse with a comparatively broader spectral bandwidth and hence a comparatively shorter pulse duration. For instance, a 100 fs Fourier-limited long pulse may be converted into a pulse having a duration comprised between 50 fs and 80 fs Fourier limited.

According to another aspect, there is provided a pulse compressor, 14, wherein the first pulse duration compression factor may at least be 100 and the second pulse duration compression factor may at least be 3. Preferably, the first pulse duration compression factor may be a factor larger than 10000. Further preferably, the second pulse duration compression factor may be about 10 to 100. The pulse duration compression factor may be a compression factor of the pulse duration of the pulsed laser radiation. According to another aspect, there is provided a pulse compressor, 14, wherein the pulsed laser radiation may have a pulse duration of about from one picosecond to 10 nanoseconds, the first compressor element 14a may be configured to time-compress the pulse of the pulsed laser radiation to from about 100 to 500 fs and the second compressor element 14b may be configured to time-compress the pulse of the first compressed radiation to from about 5 to 200 fs.

It will be apparent for the person skilled in the art that the aspects described with reference to Figs. 1-6, above, may not only be implemented isolated from each other but may also at least partially be combined with each other where applicable.

## Claims

1. A pulse compressor (14) for time-compressing pulsed laser radiation according to a chirped pulse amplification, CPA, scheme, the pulse compressor (14) comprising a first compressor element (14a), and a second compressor element (14b),
the first compressor element (14a) being configured to receive as input the pulsed laser radiation and to produce as output first compressed radiation having a first pulse duration, the second compressor element (14b) being configured to receive as input the first compressed radiation and to produce as output second compressed radiation having a second pulse duration, the second pulse duration being shorter than the first pulse duration,
wherein the first compressor element (14a) is configured to time-compress the pulse of the pulsed laser radiation by a first compression factor and the second compressor element (14b) is configured to time-compress the pulse of the first compressed radiation by a second compression factor, wherein the first compression factor is larger than the second compression factor.

2. The pulse compressor (14) of claim 1, wherein the first compression factor is at least 100 and the second compression factor is at least 3, wherein preferably, the first compression factor is larger than 1000.

3. The pulse compressor (14) of claim 2, the first compressor element (14a) is configured to time-compress the pulse of the pulsed laser radiation from a first range to a second range and the second compressor element (14b) is configured to time-compress the pulse of the first compressed radiation from a third range to a fourth range, wherein the first range is about from 1 ps to about 10 ns, the second range is from about 100 fs to about 500 fs, the third range is from about 100 fs to about 500 fs and the fourth range is from about 5 fs to about 200 fs.

4. The pulse compressor (14) of any of the preceding claims, wherein the ratio of the first compression factor to the second compression factor is at least 10:1, and preferably at least 100:1.

5. The pulse compressor (14) of any of the previous claims, wherein the second compressor element (14b) is a multilayer structure comprising at least two layers (14b1, 14b3).

6. The pulse compressor (14) of claim 5, wherein the multilayer structure comprises at least a first layer (14b1), a second layer (14b2) and a third layer (14b3), the second layer (14b2) being sandwiched between the first layer (14b1) and the third layer (14b3), wherein the first layer (14b1) and the third layer (14b3) are made of respective solid- materials and the second layer (14b2) comprises a fluid or gas substance.

7. The pulse compressor (14) of any of the previous claims, wherein at least one of the first compressor element (14a) and the second compressor element (14b) is a dispersion compression element, wherein preferably the first compressor element (14a) is a grating compressor and the second compressor element (14b) is a glass material, a transparent material, or partially transparent material.

8. The pulse compressor (14) of claim 7, wherein the second compressor element (14b) is transparent or partially transparent at least in the wavelength range from 250 to 1100 nm.

9. The pulse compressor (14) of any of the previous claims,
wherein the second compressor element (14b) is configured to have a material dispersion that is higher in the wavelength range from 375 nm to 550 nm than the material dispersion in the wavelength range from 575 nm to 2500 nm.

10. The pulse compressor (14) of any of the preceding claims, wherein either:
the second compressor element (14b) is a window for an experimental chamber (17),
the second compressor element (14b) is comprised in a window for an experimental chamber (17), or
the second compressor element (14b) is incorporable in a window for an experimental chamber (17).

11. A system (100) for producing pulsed laser radiation, comprising:
a pulse stretcher (12),
an amplifier (13),
the pulse compressor (14) of any of the previous claims,
a laser radiation source (11) emitting pulsed laser radiation, the pulsed laser radiation comprising a fundamental component in the wavelength range comprised between 575 nm to 2500 nm, and harmonic components,
at least one optic element (19) configured to remove laser radiation components lower than the Nth harmonic of the laser radiation source, wherein N is an integer number equal to or larger than 2.

12. The system of claim 11 further comprising a beam expander placed between the first compressor element (14a) and the second compressor element (14b) and configured to receive as input the first compressed radiation and expand it, the second compressor element (14b) being configured to receive as input the expanded first compressed radiation.

13. The system of claim 11, further comprising a spatial light modulation unit for manipulating the shape of the first compressed radiation in proximity of the second compressor element (14b), wherein the spatial light modulation unit is arranged in correspondence of the pulse stretcher, preferably wherein the spatial light modulation unit comprises either a spatial filter, or a Pockels cell, or an adaptive mirror.

14. The system of any of the preceding claims, wherein at least one transport mirror is interposed between the first compressor element (14a) and the second compressor element (14b).

15. A method for compressing a pulse of pulsed laser radiation according to a chirped pulse amplification, CPA, scheme, the method comprising:
providing (S1) a first compressor element (14a) configured to receive as input the pulsed laser radiation and to produce as output first compressed radiation having a first pulse duration,
providing (S2) a second compressor element (14b) configured to receive as input the first compressed radiation and to produce as output second compressed radiation having a second pulse duration, wherein the second pulse duration being shorter than the first pulse duration,
letting (S3) the pulsed laser radiation impinge on the first compressor element (14a),
letting (S4) the first compressed radiation impinge on the second compressor element (14b) so as to produce as output the second compressed radiation.
